# EUROPÄISCHE PATENTSCHRIFT

(11) **EP 1 313 658 B1**
(45) Veröffentlichungstag und Bekanntmachung des Hinweises auf die Patenterteilung: **01.09.2004**
(21) Anmeldenummer: 01915087.9
(22) Anmeldetag: 06.03.2001
(51) Int. Cl.: B65G 69/18, F16L 37/30

(54) **VORRICHTUNG ZUM KUPPELN ZWEIER AUFBEWAHRUNGS- UND/ODER FÖRDERMITTEL MIT EINER REINIGUNGSEINRICHTUNG**
DEVICE FOR COUPLING TWO STORAGE AND/OR TRANSPORT MEANS WITH A CLEANING DEVICE
DISPOSITIF DE COUPLAGE DE DEUX MOYENS DE STOCKAGE ET/OU D'ACHEMINEMENT AVEC UN DISPOSITIF DE NETTOYAGE

(30) Priorität: 28.08.2000 DE 20014872 U
(43) Veröffentlichungstag der Anmeldung: 28.05.2003
(73) Patentinhaber: GEA Buck Valve GmbH, 79379 Müllheim (DE)
(72) Erfinder: KOCH, Martin, 79395 Neuenburg (DE); ELSÄSSER, Bernd, 79282 Ballrechten-Dottingen (DE); MOELLER, Klaus, Crawley, Winchester, Hampshire SO21 2OU (GB)
(74) Vertreter: Weber-Bruls, Dorothée, Dr.
(86) Internationale Anmeldenummer: PCT/DE2001/000853
(87) Internationale Veröffentlichungsnummer: WO 2002/018247

(56) Entgegenhaltungen:
- EP-A- 0 554 096
- EP-B- 0 619 254
- FR-A- 2 640 598
- GB-A- 888 541
- US-A- 5 095 946
- US-A- 5 540 266
- US-A- 5 884 660

## Beschreibung

Die Erfindung betrifft eine Vorrichtung zum Kuppeln zweier Aufbewahrungs- und/oder Fördermittel, wie in Form von Behältnissen, Containern, Rohren und/oder dergleichen, zwecks Transfer eines Produktes von einem ersten Aufbewahrungs- und/oder Fördermittel mit einer ersten Schließklappe in einem ersten Rohrstutzen an einem ersten Ende und in Wirkverbindung mit zumindest einer Welle in ein zweites Aufbewahrungs- und/oder Fördermittel mit einer zweiten Schließklappe in einem zweiten Rohrstutzen an einem zweiten Ende und in Wirkverbindung mit der zumindest einen Welle, wobei die Schließklappen von einer Schließstellung, in der die erste Schließklappe das erste Aufbewahrungs- und/oder Fördermittel an dem ersten Ende gegenüber Atmosphäre dicht abschließt, die zweite Schließklappe das zweite Aufbewahrungs- und/oder Fördermittel an dem zweiten Ende gegenüber Atmosphäre dicht abschließt und die beiden Schließklappen und/oder die beiden Rohrstutzen relativ zueinander bewegbar sind, in eine Reinigungsstellung, in der die beiden Schließklappen und/oder die beiden Rohrstutzen voneinander unter Begrenzung eines mit einer Reinigungseinrichtung verbindbaren Reinigungsraums beabstandet sind, sowie unter Betätigung der zumindest einen Welle in eine Offenstellung, in der die Schließklappen aufeinander aufliegen und zumindest eine Durchflußöffnung von dem ersten Aufbewahrungs- und/oder Fördermittel in das zweite Aufbewahrungs- und/oder Fördermittel für das Produkt offen ist, und von der Offenstellung in die Reinigungsstellung unter Betätigung der zumindest einen Welle sowie in die Schließstellung bewegbar sind

Solch eine Vorrichtung ist, beispielsweise, aus der DE 195 20 409 C1 bekannt, bei der die Reinigungseinrichtung eine Blas- und Absaugeinrichtung umfaßt, die ein Reinigen der Schließklappen vor und/oder nach einem mittels der Vorrichtung zu bewerkstelligenden Produkttransfer bzw. Umfüllvorgang mit einem Gas ermöglicht. Dabei kommt eine Dichtung zum Einsatz, die bei einem Abstand der Schließklappen von vorzugsweise weniger als 15 mm den zwischen den Schließklappen befindlichen Raum, also die Stoßkammer, nachteiligerweise mit Ausnahme der Bereiche der Lagerschalen derselben, nach außen hin abdichtet. Somit besteht bei der bekannten Vorrichtung die Gefahr einer Kontamination sowohl des umzufüllenden Produkts als auch der Atmosphäre. Auch ein Reinigen der Stoßkammer mit einer Flüssigkeit ist aufgrund von Leckage unmöglich.

Ein Abdichten einer Stoßkammer gegenüber zumindest einem Teil der Schließklappen ist in der DE-U-299159 73 beschrieben. Ein gegenüber der Stoßkammer abgedichteter Zwischenraum zwischen den Schließklappen stellt dabei sicher, daß durch eine Abreinigung eventuell aufgewirbelte Stäube nicht auf besagte abgedichtete Stirnflächenbereiche gelangen können und gleichzeitig der Absaugquerschnitt für ein Reinigungsgas, Schutzgas und/oder dergleichen samt zu entfernenden Partikeln verkleinert wird, so daß der Volumenstrom zur Absaugung erhöht und ein starker Absaugleistung vorliegt.

Ferner ist aus der GB-PS 888,541 eine Vorrichtung zum Kuppeln zweier Behältnisse bekannt, bei der die Rohrstutzen relativ zueinander drehbar sind, so daß durch Drehen der Rohrstutzen relativ zueinander ein Bajonettverschluß verriegelt oder entriegelt und zeitgleich die Schließklappen von der Schließstellung in die Offenstellung oder von der Offenstellung in die Schließstellung gezwungen werden, so daß die Verriegelungsstellung mit der Offenstellung zusammenfällt. Solch eine Verriegelung ist insbesondere dadurch nachteilig, daß sich während des Wechsels von der Schließstellung in die Offenstellung, oder vice verca, auch wegen des Einsatzes nur eines Bajonettverschlusses, die Schließklappen unbeabsichtigterweise voneinander lösen können. Zudem ist ein Reinigen vor und/oder nach einem Umfüllvorgang in der Offenstellung nicht in einem verriegelten Zustand zwecks Vermeidung einer Kontamination, der Atmosphäre und/oder des umzufüllenden Produkts, möglich.

Aufgabe der vorliegenden Erfindung ist es daher, die gattungsgemäße Vorrichtung derart weiterzuentwickeln, daß die Nachteile des Stands der Technik überwunden werden, insbesondere ein Reinigen des Reinigungsraums, auch im Bereich der Lagerung der Schließklappen, ohne Kontamination der Atmosphäre und/oder eines umzufüllenden Produkts möglich wird. Zudem soll ein sicherer Verschluß der Schließklappen und/oder Rohrstutzen gegeneinander vor Öffnen der Durchflußöffnung(en) für einen Umfüllvorgang sowie nach Schließen der Durchflußöffnung(en), insbesondere in der Reinigungsstellung, gewährleistet sein.

Diese Aufgabe wird erfindungsgemäß gelöst durch eine erste im wesentlichen ringförmige Dichtung zwischen der ersten Schließklappe und dem ersten Rohrstutzen, eine zweite im wesentlichen ringförmige Dichtung zwischen der zweiten Schließklappe und dem zweiten Rohrstutzen, eine dritte im wesentlichen ringförmige Dichtung zwischen dem ersten Rohrstutzen und dem zweiten Rohrstutzen und eine vierte im wesentlichen ringförmige Dichtung zwischen dem zweiten Rohrstutzen und einem mit der zumindest einen Welle kooperierenden und fest mit der zweiten Schließklappe verbundenen zweiten Wellenabschnitt, wobei die erste, zweite, dritte und vierte Dichtungen den Reinigungsraum sowohl zur Atmosphäre als auch zum Produkt abdichten.

Dabei kann vorgesehen sein, daß der erste Wellenabschnitt eine erste Halbachse ist, der zweite Wellenabschnitt eine Vollachse ist, die mit der zweiten Schließklappe über eine zweite Halbachse verbunden ist, und die erste Halbachse und die zweite Halbachse sich zu einer Vollachse ergänzen.

Ferner sind erfindungsgemäß bevorzugte Ausführungsformen gekennzeichnet durch eine Betätigungseinrichtung, über die eine Sicherungseinrichtung zum Wechsel von der Schließstellung in eine Verriegelungsstellung, in der die beiden Aufbewahrungs- und/oder Fördermittel gegeneinander abgedichtet und die beiden Schließklappen und/oder die beiden Rohrstutzen fest miteinander verbunden sind, dann eine Schwenkeinrichtung zum Wechsel von der Verriegelungsstellung in die Offenstellung sowie der Offenstellung in die Verriegelungsstellung und daraufhin die Sicherungseinrichtung zum Wechsel von der Verriegelungsstellung in die Schließstellung antreibbar sind.

Dabei kann vorgesehen sein, daß die Betätigungseinrichtung eine Getriebeeinrichtung mit einer Antriebswelle und zumindest zwei Ausgangswellen umfaßt, wobei die beiden Ausgangswellen abwechselnd von der Antriebswelle ansprechbar sind.

Weiterentwicklungen der Erfindung sind dadurch gekennzeichnet, daß die Sicherungseinrichtung einerseits mit der ersten Ausgangswelle und andererseits mit den beiden Rohrstutzen in Wirkverbindung steht, wobei die Sicherungseinrichtung vorzugsweise ein Anschlußglied zwischen dem ersten Rohrstutzen und dem zweiten Rohrstutzen umfaßt, das zum Verriegeln der beiden Rohrstutzen relativ zueinander oder Entriegeln derselben, insbesondere über zumindest einen Bajonettverschluß, um eine erste Achse drehbar ist.

Ferner wird mit der Erfindung vorgeschlagen, daß die Schwenkeinrichtung einerseits mit der die zumindest eine Welle bildenden zweiten Ausgangswelle und andererseits mit zumindest einer der beiden Schließklappen zum Drehen der Schließklappen um eine zweite Achse in Wirkverbindung steht, wobei die Schwenkeinrichtung vorzugsweise die beiden Halbachsen umfaßt.

Bevorzugt ist erfindungsgemäß, daß die Reinigungsstellung sowohl zwischen der Schließstellung und der Verriegelungsstellung als auch zwischen der Offenstellung und der Verriegelungsstellung mit zumindest teilweise fest miteinander verbundenen Schließklappen und/oder Rohrstutzen anfahrbar ist.

Mit der Erfindung wird auch vorgeschlagen, daß das Anschlußglied zumindest einen Vorsprung oder zumindest eine Ausnehmung aufweist, und jeder Vorsprung bzw. jede Ausnehmung des Anschlußglieds mit einer Ausnehmung bzw. einem Vorsprung des ersten Rohrstutzens und/oder des zweiten Rohrstutzens in der Verriegelungsstellung fest in Eingriff steht, wobei vorzugsweise jeder Vorsprung bzw. jede Ausnehmung des Anschlußgliedes oder des/der Rohrstutzen(s) zumindest bereichsweise einen Winkel zur ersten Achse einschließt bzw. einschließen, um die Schließklappen durch Drehung des Anschlußglieds um die erste Achse voneinander weg, insbesondere zwischen der Offenstellung und der Verriegelungsstellung bzw. aufeinander zu, insbesondere zwischen der Schließstellung und der Verriegelungsstellung zu bewegen.

Vorteilhafterweise kann auch vorgesehen sein, daß die erste Schließklappe eine erste Stirnfläche mit zumindest einer Vertiefung und/oder Erhöhung aufweist, die zweite Schließklappe eine zu der ersten Stirnfläche komplementäre zweite Stirnfläche aufweist, und die beiden Stirnflächen zumindest in der Offenstellung dicht aneinander anliegen, wobei vorzugsweise in der Reinigungsstellung die Stirnflächen im Bereich der zumindest einen Vertiefung und/oder Erhöhung gegeneinander abgedichtet sind und der Reinigungsraum im wesentlichen ringförmig ist.

Weiterentwicklungen der Erfindung sind dadurch gekennzeichnet, daß die erste Schließklappe zumindest eine erste Ausnehmung auf ihrer der ersten Stirnfläche gegenüberliegenden Seite und/oder die zweite Schließklappe zumindest eine zweite Ausnehmung auf ihrer der zweiten Stirnfläche gegenüberliegenden Seite zur Vergrößerung der Durchflußöffnung bzw. Durchflußöffnungen in der Offenstellung aufweist bzw. aufweisen, wobei vorzugsweise die erste Ausnehmung und/oder die zweite Ausnehmung im wesentlichen kugelsegmentförmig ist bzw. sind.

Ferner kann bevorzugt vorgesehen sein, daß in der Offenstellung die erste Schließklappe zumindest teilweise in Eingriff mit dem zweiten Rohrstutzen und/oder die zweite Schließklappe zumindest teilweise in Eingriff mit dem ersten Rohrstutzen ist bzw. sind.

Dabei wird vorgeschlagen, daß die erste Schließklappe und/oder die zweite Schließklappe zumindest einen teilringförmigen Vorsprung, vorzugsweise zwei sich gegenüberliegende teilringförmige Vorsprünge, konzentrisch zur zweiten Achse zum Eingriff in zumindest eine teilringförmige Ausnehmung in dem ersten Rohrstutzen und/oder in dem zweiten Rohrstutzen aufweist bzw. aufweisen.

Alternativerweise kann auch vorgesehen sein, daß die erste Schließklappe und/oder die zweite Schließklappe zumindest eine teilringförmige Nut, vorzugsweise zwei sich gegenüberliegende teilringförmige Nuten, konzentrisch zur zweiten Achse zum Eingriff in zumindest eine teilringförmige Ausnehmung in dem ersten Rohrstutzen und/oder in dem zweiten Rohrstutzen aufweist bzw. aufweisen.

Ferner kann vorgesehen sein, daß die zweite Achse im wesentlichen senkrecht zur ersten Achse steht.

Weiterhin kann erfindungsgemäß vorgesehen sein, daß die erste Schließklappe Bestandteil eines passiven Ventils und die zweite Schließklappe Bestandteil eines aktiven Ventils ist, wobei vorzugsweise die zweite Halbachse fest mit der zweiten Ausgangswelle verbunden ist.

Ferner wird mit der Erfindung vorgeschlagen, daß die Reinigungseinrichtung eine Blas- und Absaugeinrichtung zum Fluten des Reinigungsraums mit einem fluiden Reinigungsmittel umfaßt.

Weiterhin werden erfindungsgemäß Weiterentwicklungen vorgeschlagen, die dadurch gekennzeichnet sind, daß die erste, zweite, dritte und/oder vierte Dichtung(en) resistent gegenüber Säuren und/oder Basen ist bzw. sind.

Bevorzugt wird vorgeschlagen, daß der Reinigungsraum als Schleuse wirkt.

Ferner wird erfindungsgemäß vorgeschlagen, daß der Reinigungsraum auf einen Druck unterhalb des Atmosphärendrucks und/oder des Drucks im Bereich der Durchflußöffnung bringbar ist.

Weiterhin ist die Erfindung gekennzeichnet durch eine Sensiereinheit zum Bestimmen der Produktkonzentration im Reinigungsraum, insbesondere in Wirkverbindung mit der Betätigungseinrichtung.

Dabei ist die Erfindung dadurch gekennzeichnet, daß bei Unterschreiten eines auswählbaren Grenzwertes der bestimmten Produktkonzentration die Betätigungseinrichtung zum Antreiben der Schließklappe in die Schließstellung freigebbar ist.

Der Erfindung liegt somit die überraschende Erkenntnis zugrunde, daß in einer Reinigungsstellung, sowohl vor als auch nach einem Umfüllvorgang, ein Bereich zwischen den Rohrstutzen und zumindest einem Teil der Stirnflächen der Schließklappen, die sogenannte Stoßkammer, die erstmals als allseits geschlossener Reinigungsraum, der sowohl zur Außenatmosphäre als auch zum Produktraum abgedichtet ist, ausgeführt und gegebenenfalls vor einem unbeabsichtigten Aufbrechen aufgrund einer zumindest teilweisen Verriegelung der Rohrstutzen gegeneinander geschützt ist, ohne die Gefahr einer Kontamination, sei es des umzufüllenden Produkts und/oder der Atmosphäre, gereinigt werden kann, selbst mit einer Reinigungsflüssigkeit. Ferner sind insbesondere bei Einsatz einer einzigen Betätigungseinrichtung abwechselnd, also nicht zeitgleich, eine Sicherungseinrichtung und eine Schwenkeinrichtung ansprechbar, so daß nach Kuppeln zweier Behältnisse beispielsweise durch Drehung einer Antriebswelle über 90° die Rohrstutzen über die Schwenkeinrichtung fest miteinander verriegelt werden unter zwischenzeitlicher Herstellung des Reinigungsraums, so daß in der Reinigungsstellung ein Trennen der Rohrstutzen unmöglich und ein Reinigen des Reinigungsraums möglich wird, während die Schließklappen in den Rohrstutzen für einen dichten Verschluß der Rohrstutzen sorgen, und anschließend durch Drehen von 90° bis 180° der Antriebswelle die Schließklappen in ihre Offenstellung über die Schwenkeinrichtung gedreht werden, um einen Umifüllvorgang zu ermöglichen. Durch Zurückdrehen der Antriebswelle von 180° auf 90° werden die Schließklappen wieder in ihre Schließstellung gebracht und von 90° auf 0° wird zwischenzeitlich der Reinigungsraum geöffnet, gereinigt, und anschließend werden die Rohrstutzen voneinander gelöst.

Weitere Merkmale und Vorteile der Erfindung ergeben sich aus der nachfolgenden Beschreibung, in der Ausführungsbeispiele der Erfindung anhand von schematischen Zeichnungen im Einzelnen erläutert sind. Dabei zeigt:
- Figur 1: eine Querschnittsansicht durch eine erfindungsgemäße Vorrichtung, in der sich die Schließklappen in ihrer Offenstellung befinden;
- Figur 2: eine Längsschnittansicht der in Figur 1 gezeigten Vorrichtung, in der sich die Schließklappen in ihrer Reinigungsstellung befinden;
- Figur 3: eine perspektivische Ansicht einer Schließklappe, die mit einer Vorrichtung gemäß den Figuren 1 und 2 verwendbar ist; und
- Figur 4: eine Teilansicht eines Anschlußrings, der in einer Vorrichtung gemäß den Figuren 1 und 2 verwendbar ist.

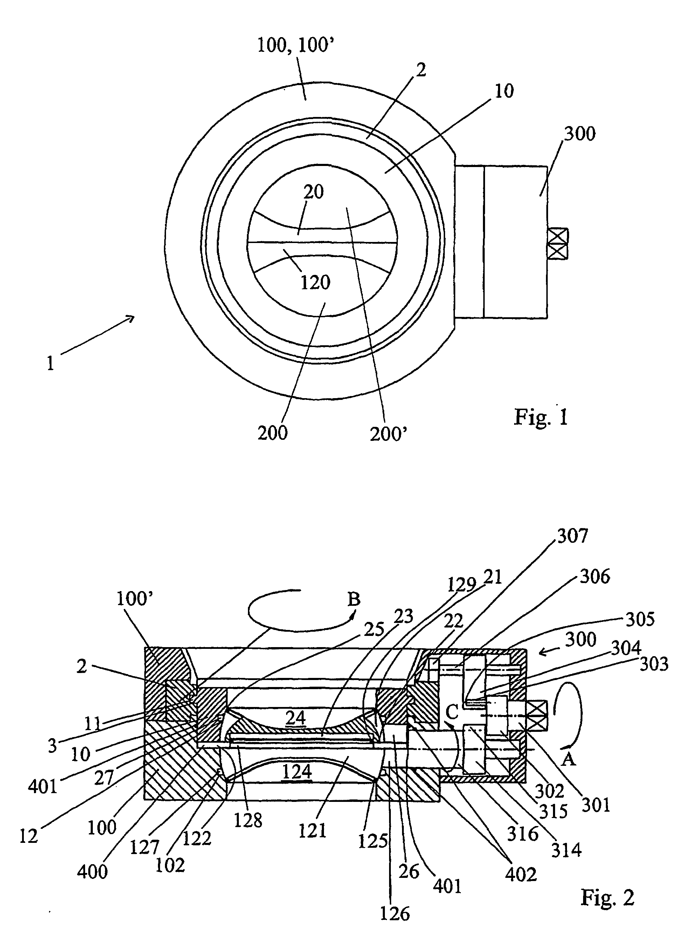

Wie Figur 1 zu entnehmen ist, umfaßt eine erfindungsgemäße Vorrichtung 1 einen ersten Rohrstutzen 10 an einem ersten, nicht gezeigten Behältnis, der, sobald das erste Behältnis mit einem zweiten, nicht gezeigten Behältnis gekuppelt ist, unter Zwischenschaltung eines Anschlußglieds bzw. Anschlußrings 2 in einem zweiten, zweiteilig ausgeführten Rohrstutzen 100, 100' des zweiten Behältnisses gelagert ist. In den beiden Rohrstutzen 10, 100, 100' sind wiederum zwei Ventile 20, 120 gelagert, wobei das erste Ventil 20 passiv und das zweite Ventil 120 aktiv sein kann, so daß lediglich das aktive Ventil 120 zur Öffnung bzw. Schließung von Durchflußöffnungen 200, 200' von dem ersten Behältnis zu dem zweiten Behältnis unter Einsatz einer Getriebeeinrichtung 300 aktiv betätigbar ist.

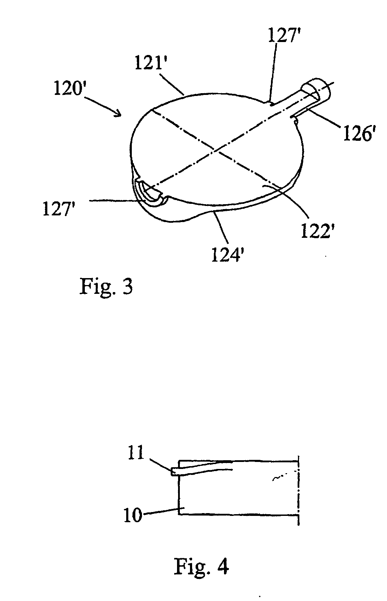

In der in Figur 2 gezeigten Reinigungsstellung umgreift der zweite Rohrstutzen 100, 100' den Anschlußring 2, der wiederum den ersten Rohrstutzen 10 angreift, so daß sich die Rohrstutzen 10, 100, 100' nicht relativ zueinander bewegen können. Zu diesem Zweck ist der Anschlußring 2 mit zwei sich gegenüberliegenden und längs des Innenumfangs erstreckenden Ausnehmungen 3 versehen, in die jeweils ein Vorsprung 11 des ersten Rohrstutzens 10 eingreifen kann, wobei sich jeder Vorsprung 11 längs des Außenumfangs des ersten Rohrstutzens 10 zumindest teilweise in gebogener Form erstreckt, wie in Figur 4 dargestellt.

Der erste Rohrstutzen 10 weist zudem zwei sich gegenüberliegende Ausnehmungen 12 auf, in die das passive Ventil 20 in der Verriegelungsstellung gemäß Figur 2 eingreift. Das passive Ventil 20 seinerseits umfaßt eine Klappe 21 mit einer Stirnfläche 22, in der eine Vertiefung 23 ausgeformt ist, und einer kugelsegmentförmigen Ausnehmung 24 auf der der Stirnfläche 22 gegenüberliegenden Seite. Ferner ist das passive Ventil 20 gegenüber dem ersten Rohrstutzen 10 mittels einer Klappendichtung 25 abgedichtet und mit einer Halbachse 26 fest verbunden. Schließlich umfaßt das passive Ventil 20 auch zwei Vorsprünge 27 zum Eingriff in die Ausnehmungen 12.

In analoger Weise ist das aktive Ventil 120 in dem zweiten Rohrstutzen 100 durch Eingriff in zwei sich gegenüberliegende Ausnehmungen 102 gelagert. Das aktive Ventil 120 umfaßt seinerseits eine Klappe 121 mit einer Stirnfläche 122, von der sich ein Vorsprung 127 abhebt, und einer kugelsegmentförmigen Ausnehmung 124 auf der der Stirnfläche 122 gegenüberliegenden Seite. Auch das aktive Ventil 120 ist gegenüber dem zweiten Rohrstutzen 100 unter Einsatz einer Klappendichtung 125 abgedichtet. Die Klappe 121 des aktiven Ventils 120 ist fest mit einer zweiten Halbachse 126 ausgebildet. Ferner werden Vorsprünge 127 zum Eingriff in die Ausnehmungen 102 gemäß Figur 2 vom aktiven Ventil 120 bereitgestellt. Zudem ist zwischen den beiden Klappen 21, 121 im Bereich der Vertiefung 23, in die die Erhebung 128 gemäß Figur 2 zum Teil eingreift, eine weitere Klappendichtung 129 vorgesehen.

Ein alternatives aktives Ventil 120' ist in Figur 3 dargestellt. Das aktive Ventil 120' umfaßt dabei eine Klappe 121' mit einer ebenen Stirnfläche 122' und einer kugelsegmentförmigen Ausnehmung 124' auf ihrer der Stirnfläche 122' gegenüberliegenden Seite. Ferner ist die Klappe 121' einseitig mit einer Halbachse 126' versehen, konzentrisch zu deren Längsachse zwei halbkreisförmige Vorsprünge 127 verlaufen.

Die Getriebeeinrichtung 300 umfaßt gemäß Figur 2 eine Antriebswelle 301 mit einer Scheibe 302 und einem Stöpsel 303, der abwechselnd an eine Scheibe 304 mit einer Ausnehmung 305 zum Antreiben einer ersten Ausgangswelle 306 oder an eine Scheibe 314 mit einer Ausnehmung 315 zum Antreiben einer zweiten Ausgangswelle 316 angreift. Die erste Ausgangswelle 306 ist ferner mit einer Scheibe 307 verbunden, die an den Anschlußring 2 zum Drehen desselben angreift, während die zweite Ausgangswelle 316 in die erste Halbachse 126 zum Betätigen des aktiven Ventils 120 übergeht.

In der in Figur 2 dargestellten Reinigungsstellung ist schließlich ein allseits geschlossener Reinigungsraum 400 zwischen den Rohrstutzen 10, 100 sowie den Klappen 21, 121 vorgesehen. Zum Abdichten des Reinigungsraums 400 gegenüber der Atmosphäre ist eine erste Ringdichtung 401 zwischen den beiden Rohrstutzen 10, 100 und eine zweite Ringdichtung 402 zwischen dem zweiten Rohrstutzen 100 und der zweiten Ausgangswelle 316 angeordnet. Eine Abdichtung gegenüber dem Produktraum wird hingegen durch die Klappendichtungen 25 und 125 sichergestellt. Zudem liegt eine Dichtung zu einem Zwischenraum zwischen den Schließklappen 21, 121 aufgrund der weiteren Klappendichtung 129 vor. Der Reinigungsraum 400 ist außerdem mit einer nicht gezeigten Reinigungseinrichtung verbindbar, die ihrerseits eine Blas- und Absaugeinrichtung umfaßt.

Die in ihrem Aufbau mit Bezug auf die Figuren soeben beschriebene Vorrichtung arbeitet beispielsweise wie folgt:
Zuerst wird der erste Rohrstutzen 10 samt dem passiven Ventil 20 in den zweiten Rohrstutzen 100, 100' sowie den Anschlußring 2 eingeschoben, bis der erste Rohrstutzen 10 auf dem zweiten Rohrstutzen 100 zu liegen kommt.
Wird nun die Antriebswelle 301 in Richtung des Pfeils A in Figur 2 gedreht, so hakt sich der Stöpsel 303 in die Ausnehmung 305 in der Scheibe 304 ein, um besagte Drehbewegung auf die erste Ausgangswelle 306 zu übertragen. Die erste Ausgangswelle 306 erzwingt dann unter Einsatz der Scheibe 307 eine Drehung des Anschlußringes 2 in Richtung des Pfeils B in Figur 2, so daß die Vorsprünge 11 des ersten Rohrstutzens 10 in die entsprechenden Ausnehmungen 3 des Anschlußrings 2 eingreifen, was zu einer Verriegelung der Rohrstutzen 10, 100 100' nach Art eines Bajonettverschlusses führt. Aufgrund der Krümmung der Vorsprünge 11 des ersten Rohrstutzens 10 kommt es bei der Drehung des Anschlußrings 2 in Richtung des Pfeils B gleichzeitig zu einem Absenken des ersten Rohrstutzens 10 auf dem zweiten Rohrstutzen 100, so daß der Reinigungsraum 400 entsteht, der sowohl gegenüber Atmosphäre als auch gegenüber dem durch die Klappendichtung 129 abgedichteten Bereich zwischen den Stirnflächen 22, 122 in der Reinigungseinrichtung abgedichtet ist, wie in Figur 2 dargestellt. Der Reinigungsraum 400 kann dann mit einem Reinigungsgas oder einer Reinigungsflüssigkeit durchflutet werden, um gefahrenlos vor einem Umfüllvorgang, ohne Verschmutzung der abgedichteten Stirnflächenbereiche, Restkontaminationen zu entfernen. Dabei kann selbst durch geeignete Wahl des Materials der Dichtungen 25, 125, 129, 401 und 402, die für ein dichtes Verschließen des Reinigungsraums 400 sorgen, eine Säure und/oder Base zum Reinigen verwendet werden. Nach besagtem Reinigen wird dann die Antriebswelle 301 weiter gedreht, unter gleichzeitigem weiteren Verriegeln und weiterem Absenken des ersten Rohrstutzens 10 relativ zu dem zweiten Rohrstutzen 100, und zwar so lange, bis die Stirnflächen 22, 122 der Schließklappen 21, 121 in der Verriegelungsstellung dicht aufeinander liegen.

Eine weitere Drehung der Antriebswelle 301 bewirkt, daß sich der Stöpsel 303 aus der Ausnehmung 305 löst und in die Ausnehmung 315 der Scheibe 314 einhakt, so daß dann eine weitere Drehbewegung in Richtung des Pfeils A auf die zweite Ausgangswelle 316 übertragen wird. Bei der weiteren Drehung der Antriebswelle 301 kommt es zu einem Drehen der Ventile 20, 120 in die in Figur 1 dargestellte Offenstellung, wobei gleichzeitig die Vorsprünge 27 an der ersten Klappe 21 in die Ausnehmungen 102 des zweiten Rohrstutzens 100 und die Vorsprünge 127 an der zweiten Klappe 121 in die Ausnehmungen 12 des ersten Rohrstutzens 10 eingreifen, was zu einer Verriegelung der Ventile 20, 120 mit den Rohrstutzen 10, 100, 100' führt, die es unmöglich macht, die Ventile 20, 120 in der Offenstellung voneinander zu trennen. In der Offenstellung kann durch die Durchflußöffnungen 200, 200' ein nicht gezeigtes Produkt von dem ersten Behälter in den zweiten Behälter fließen.

Nach Beendigung der Produktumfüllung kann dann die Antriebswelle 301 in ihre Ausgangsstellung, also entgegen der Drehrichtung A in Figur 2, zurückgedreht werden, wobei hier wieder über Drehung der zweiten Ausgangswelle 316 die Schließklappen 21, 121 in ihre jeweiligen Rohrstutzen 10, 100 zum Abdichten der Behälter gegeneinander bis in die Verriegelungsstellung gedreht werden. Sodann wechselt der Stöpsel 303 wieder von der Ausnehmung 315 in die Ausnehmung 305, um über die erste Ausgangswelle 306 den Anschlußring 2 bis in die Figur 2 gezeigte Reinigungsstellung zu drehen, in der dann ein erneutes Reinigen des Reinigungsraumes 400 möglich ist. Beim Erreichen der Ausgangsposition der Antriebswelle 301 wird schließlich die Verriegelung durch Lösung der Verbindung zwischen den Vorsprüngen 11 und den Ausnehmungen 3 aufgehoben, so daß dann die beiden Behältnisse wieder voneinander getrennt werden können.

Zusammenfassend ist somit festzuhalten, daß sich mit der erfindungsgemäßen Vorrichtung durch Betätigen lediglich der Antriebswelle 301 nacheinander folgende Stadien durchlaufen lassen:
1. Verriegeln der Rohrstutzen 10, 100, 100' relativ zueinander unter gleichzeitigem Abdichten des Reinigungsraums 400;
2. Reinigen des abgedichteten Reinigungsraums 400 in der Reinigungsstellung;
3. Schließen des Reinigungsraums 400 bis Erreichen der Verriegelungsstellung;
4. Öffnen der Durchflußöffnungen 200, 200' unter gleichzeitigem Verriegeln der Schließklappen 21, 121 mit den Rohrstutzen 10,100;
5. Umfüllen eines Produktes von dem ersten Behälter in den zweiten Behälter,
6. Schließen der Durchflußöffnungen 200, 200' unter gleichzeitigem Lösen der Verriegelung zwischen den Schließklappen 21, 121 und den Rohrstutzen 10, 100;
7. Öffnen des Reinigungsraums 400 in der teilverriegelten Reinigungsstellung;
8. Reinigen des abgedichteten Reinigungsraums 400; und
9. Vollständiges Öffnen des Reinigungsraums 400 unter gleichzeitigem Lösen der Verriegelung zwischen den Rohrstutzen 10, 100, 100'.

## Patentansprüche

1. Vorrichtung zum Kuppeln zweier Aufbewahrungs- und/oder Fördermittel, wie in Form von Behältnissen, Containern, Rohren und/oder dergleichen, zwecks Transfer eines Produktes von einem ersten Aufbewahrungs- und/oder Fördermittel mit einer ersten Schließklappe in einem ersten Rohrstutzen (10) an einem ersten Ende und in Wirkverbindung mit zumindest einer Welle in ein zweites Aufbewahrungs- und/oder Fördermittel mit einer zweiten Schließklappe in einem zweiten Rohrstutzen (100, 100') an einem zweiten Ende und in Wirkverbindung mit der zumindest einen Welle, wobei die Schließklappen von einer Schließstellung, in der die erste Schließklappe (21) das erste Aufbewahrungs- und/oder Fördermittel an dem ersten Ende gegenüber Atmosphäre dicht abschließt, die zweite Schließklappe (121) das zweite Aufbewahrungs- und/oder Fördermittel an dem zweiten Ende gegenüber Atmosphäre dicht abschließt und die beiden Schließklappen und/oder die beiden Rohrstutzen relativ zueinander bewegbar sind, in eine Reinigungsstellung, in der die beiden Schließklappen und/oder die beiden Rohrstutzen voneinander unter Begrenzung eines mit einer Reinigungseinrichtung verbindbaren Reinigungsraums (400) beabstandet sind, sowie unter Betätigung der zumindest einen Welle in eine Offenstellung, in der die Schließklappen aufeinander aufliegen und zumindest eine Durchflußöffnung von dem ersten Aufbewahrungs- und/oder Fördermittel in das zweite Aufbewahrungs- und/oder Fördermittel für das Produkt offen ist, und von der Offenstellung in die Reinigungsstellung unter Betätigung der zumindest einen Welle sowie in die Schließstellung bewegbar sind, **gekennzeichnet durch**
eine erste im wesentlichen ringförmige Dichtung (25) zwischen der ersten Schließklappe (21) und dem ersten Rohrstutzen (10),
eine zweite im wesentlichen ringförmige Dichtung (125) zwischen der zweiten Schließklappe (121) und dem zweiten Rohrstutzen (100),
eine dritte im wesentlichen ringförmige Dichtung (401) zwischen dem ersten Rohrstutzen (10) und dem zweiten Rohrstutzen (100), und
eine vierte im wesentlichen ringförmige Dichtung (402) zwischen dem zweiten Rohrstutzen (100) und einem mit der zumindest einen Welle (316) kooperierenden und fest mit der zweiten Schließklappe (121) verbundenen zweiten Wellenabschnitt (126), wobei die erste, zweite, dritte und vierte Dichtungen (25, 125, 401, 402) den Reinigungsraum (400) sowohl zur Atmosphäre als auch zum Produkt abdichten.

2. Vorrichtung nach Anspruch 1, **dadurch gekennzeichnet, daß**
der erste Wellenabschnitt eine erste Halbachse (26) ist, der zweite Wellenabschnitt eine Vollachse (316) ist, die mit der zweiten Schließklappe (121) über eine zweite Halbachse (126) verbunden ist, und die erste Halbachse (26) und die zweite Halbachse (126) sich zu einer Vollachse ergänzen.

3. Vorrichtung nach Anspruch 1 oder 2, **gekennzeichnet durch**
eine Betätigungseinrichtung (300, 301, 302, 303, 304, 305, 306, 307, 314, 315, 316), über die eine Sicherungseinrichtung (2, 3, 11) zum Wechsel von der Schließstellung in eine Verriegelungsstellung, in der die beiden Aufbewahrungs- und/oder Fördermittel gegeneinander abgedichtet und die beiden Schließklappen (21, 121, 121') und/oder die beiden Rohrstutzen (10, 100, 100') fest miteinander verbunden sind, dann eine Schwenkeinrichtung (26, 126, 126') zum Wechsel von der Verriegelungsstellung in die Offenstellung sowie der Offenstellung in die Verriegelungsstellung und daraufhin die Sicherungseinrichtung zum Wechsel von der Verriegelungsstellung in die Schließstellung antreibbar sind.

4. Vorrichtung nach Anspruch 3, **dadurch gekennzeichnet, daß**
die Betätigungseinrichtung eine Getriebeeinrichtung (300, 301. 302, 303, 304, 305, 306, 307, 314, 315, 316) mit einer Antriebswelle (301) und zumindest zwei Ausgangswellen (306, 316) umfaßt, wobei die beiden Ausgangswellen (306, 316') abwechselnd von der Antriebswelle (301) ansprechbar sind.

5. Vorrichtung nach Anspruch 4, **dadurch gekennzeichnet, daß**
die Sicherungseinrichtung (2, 3, 11) einerseits mit der ersten Ausgangswelle (306) und andererseits mit den beiden Rohrstutzen (10, 100, 100') in Wirkverbindung steht, wobei die Sicherungseinrichtung (2, 3, 11) vorzugsweise ein Anschlußglied (2) zwischen dem ersten Rohrstutzen (10) und dem zweiten Rohrstutzen (100, 100') umfaßt, das zum Verriegeln der beiden Rohrstutzen (10, 100, 100') relativ zueinander oder Entriegeln derselben, insbesondere über zumindest einen Bajonettverschluß (3, 11), um eine erste Achse drehbar ist.

6. Vorrichtung nach Anspruch 4 oder 5, **dadurch gekennzeichnet, daß**
die Schwenkeinrichtung (26, 126, 126') einerseits mit der die zumindest eine Welle bildenden zweiten Ausgangswelle (316) und andererseits mit zumindest einer der beiden Schließklappen (21, 121, 121') zum Drehen der Schließklappen (21, 121, 121') um eine zweite Achse in Wirkverbindung steht, wobei die Schwenkeinrichtung vorzugsweise die beiden Halbachsen (26, 126, 126') umfaßt

7. Vorrichtung nach einem der Ansprüche 3 bis 6, **dadurch gekennzeichnet, daß**
die Reinigungsstellung sowohl zwischen der Schließstellung und der Verriegelungsstellung als auch zwischen der Offenstellung und der Verriegelungsstellung mit zumindest teilweise fest miteinander verbundenen Schließklappen (21, 121, 121') und/oder Rohrstutzen (10, 100, 100') anfahrbar ist.

8. Vorrichtung nach einem der Ansprüche 5 bis 7, **dadurch gekennzeichnet, daß**
das Anschlußglied (2) zumindest einen Vorsprung oder zumindest eine Ausnehmung (3) aufweist, und jeder Vorsprung bzw. jede Ausnehmung (3) des Anschlußglieds (2) mit einer Ausnehmung bzw. einem Vorsprung (11) des ersten Rohrstutzens (10) und/oder des zweiten Rohrstutzens in der Verriegelungsstellung fest in Eingriff steht, wobei vorzugsweise jeder Vorsprung (11) bzw. jede Ausnehmung des Anschlußgliedes (2) oder des/der Rohrstutzen(s) (10) zumindest bereichsweise einen Winkel zur ersten Achse einschließt bzw. einschließen, um die Schließklappen (21, 121, 121') durch Drehung des Anschlußglieds (2) um die erste Achse voneinander weg, insbesondere zwischen der Offenstellung und der Verriegelungsstellung, bzw. aufeinander zu, insbesondere zwischen der Schließstellung und der Verriegelungsstellung, zu bewegen.

9. Vorrichtung nach einem der vorangehenden Ansprüche, **dadurch gekennzeichnet, daß**
die erste Schließklappe (21) eine erste Stirnfläche (22) mit zumindest einer Vertiefung (23) und/oder Erhöhung aufweist, die zweite Schließklappe (121) eine zu der ersten Stirnfläche (22) komplementäre zweite Stirnfläche (122) aufweist, und die beiden Stirnflächen (22, 122) zumindest in der Offenstellung dicht aneinander anliegen, wobei vorzugsweise in der Reinigungsstellung die Stirnflächen (22, 122') im Bereich der zumindest einen Vertiefung (23) und/oder Erhöhung gegeneinander abgedichtet sind und der Reinigungsraum (400) im wesentlichen ringförmig ist.

10. Vorrichtung nach einem der vorangehenden Ansprüche, **dadurch gekennzeichnet, daß**
die erste Schließklappe (21) zumindest eine erste Ausnehmung (24) auf ihrer der ersten Stirnfläche (22) gegenüberliegenden Seite und/oder die zweite Schließklappe (121, 121') zumindest eine zweite Ausnehmung (124, 124') auf ihrer der zweiten Stirnfläche (122,122') gegenüberliegenden Seite zur Vergrößerung der Durchflußöffnung bzw. Durchflußöffnungen (200, 200') in der Offenstellung aufweist bzw. aufweisen, wobei vorzugsweise die erste Ausnehmung (24) und/oder die zweite Ausnehmung (124, 124') im wesentlichen kugelsegmentförmig ist bzw. sind.

11. Vorrichtung nach einem der vorangehenden Ansprüche, **dadurch gekennzeichnet, daß**
in der Offenstellung die erste Schließklappe (21) zumindest teilweise in Eingriff mit dem zweiten Rohrstutzen (100) und/oder die zweite Schließklappe (121, 121') zumindest teilweise in Eingriff mit dem ersten Rohrstutzen (10) ist bzw. sind.

12. Vorrichtung nach Anspruch 11, **dadurch gekennzeichnet, daß**
die erste Schließklappe (21) und/oder die zweite Schließklappe (121, 121') zumindest einen teilringförmigen Vorsprung (27, 127, 127') , vorzugsweise zwei sich gegenüberliegende teilringförmige Vorsprünge, konzentrisch zur zweiten Achse zum Eingriff in zumindest eine teilringförmige Ausnehmung (12, 102) in dem ersten Rohrstutzen (10) und/oder in dem zweiten Rohrstutzen (100) aufweist bzw. aufweisen.

13. Vorrichtung nach Anspruch 11, **dadurch gekennzeichnet, daß**
die erste Schließklappe und/oder die zweite Schließklappe zumindest eine teilringförmige Nut, vorzugsweise zwei sich gegenüberliegende teilringförmige Nuten, konzentrisch zur zweiten Achse zum Eingriff in zumindest eine teilringförmige Ausnehmung in dem ersten Rohrstutzen und/oder in dem zweiten Rohrstutzen aufweist bzw. aufweisen.

14. Vorrichtung nach einem der Ansprüche 6 bis 13, **dadurch gekennzeichnet, daß**
die zweite Achse im wesentlichen senkrecht zur ersten Achse steht.

15. Vorrichtung nach einem der vorangehenden Ansprüche, **dadurch gekennzeichnet, daß**
die erste Schließklappe (21) Bestandteil eines passiven Ventils (20) und die zweite Schließklappe (121, 121') Bestandteil eines aktiven Ventils (120) ist, wobei vorzugsweise die zweite Halbachse (126) fest mit der zweiten Ausgangswelle (316) verbunden ist

16. Vorrichtung nach einem der vorangehenden Ansprüche, **dadurch gekennzeichnet, daß**
die Reinigungseinrichtung eine Blas- und Absaugeinrichtung zum Fluten des Reinigungsraums (400) mit einem fluiden Reinigungsmittel umfaßt.

17. Vorrichtung nach einem der vorangehenden Ansprüche, **dadurch gekennzeichnet, daß**
die erste, zweite, dritte und/oder vierte Dichtung(en) resistent gegenüber Säuren und/oder Basen ist bzw. sind.

18. Vorrichtung nach einem der vorangehenden Ansprüche, **dadurch gekennzeichnet, daß**
der Reinigungsraum (400) als Schleuse wirkt.

19. Vorrichtung nach einem der vorangehenden Ansprüche, **dadurch gekennzeichnet, daß**
der Reinigungsraum (400) auf einen Druck unterhalb des Atmosphärendrucks und/oder des Drucks im Bereich der Durchflußöffnung (200, 200') bringbar ist.

20. Vorrichtung nach einem der vorangehenden Ansprüche, **gekennzeichnet durch**
eine Sensiereinheit zum Bestimmen der Produlctkonzentration im Reinigungsraum (400), insbesondere in Wirkverbindung mit der Betätigungseinrichtung (300, 301, 302, 303, 304, 305, 306, 307, 314, 315, 316).

21. Vorrichtung nach Anspruch 20, **dadurch gekennzeichnet, daß**
bei Unterschreiten eines auswählbaren Grenzwertes der bestimmten Produktkonzentration die Betätigungseinrichtung (300, 301, 302, 303, 304, 305, 306, 307, 314, 315, 316) zum Antreiben der Schließklappe (21, 121, 121') in die Schließstellung freigebbar ist.

## Claims

1. A device for coupling two storage and/or conveyance means, such as in the form of tanks, containers, pipes and/or the like, for the purpose of transferring a product from a first storage and/or conveyance means having a first closure flap in a first spigot (10) at a first end and operatively connected to at least one shaft into a second storage and/or conveyance means with a second closure flap in a second spigot (100, 100') at a second end and operatively connected to the at least one shaft, the closure flap being movable from a closure position, in which the first closure flap (21) sealingly shuts off from atmosphere the first storage and/or conveyance means at the first end, the second closure flap (121) sealingly shuts off from atmosphere the second storage and/or conveyance means at the second end and the two closure flaps and/or the two spigots are movable relatively to one another, into a cleaning position in which the two closure flaps and/or the two spigots are spaced apart and define a cleaning chamber (400) connectable to a cleaning device, and, with actuation of the at least one shaft, into an open position in which the closure flaps bear on one another and at least one passage opening is open for the product from the first storage and/or conveyance means into the second storage and/or conveyance means, and from the open position into the cleaning position with actuation of the at least one shaft and into the closure position, **characterised by**
a first substantially annular seal (25) between the first closure flap (21) and the first spigot (10),
a second substantially annular seal (125) between the second closure flap (121) and the second spigot (100),
a third substantially annular seal (401) between the first spigot (10) and the second spigot (100), and
a fourth substantially annular seal (402) between the second spigot (100) and a second shaft portion (126) co-operating with the at least one shaft (316) and rigidly connected to the second closure flap (121),
wherein the first, second, third and fourth seals (25, 125, 401, 402) seal off the cleaning chamber (400) both from atmosphere and from the product.

2. A device according to claim 1, **characterised in that** the first shaft portion is a first half shaft (26), the second shaft portion is a full shaft (316) connected to the second closure flap (121) via a second half shaft (126) and the first half shaft (26) and the second half shaft (126) complement one another to form a full shaft.

3. A device according to claim 1 or 2, **characterised by** an actuating device (300, 301, 302, 303, 304, 305, 306, 307, 314, 315, 316), by means of which a securing device (2, 3, 11) is drivable to change from the closure position to a locking position in which the two storage and/or conveyance means are sealed off from one another and the two closure flaps (21, 121, 121') and/or the two spigots (10, 100, 100') are rigidly interconnected, and then a pivoting device (26, 126, 126') is drivable to change from the locking position to the open position and from the open position into the locking position and thereupon the securing device is drivable to change from the locking position into the closure position.

4. A device according to claim 3, **characterised in that** the actuating device comprises a transmission mechanism (300, 301, 302, 303, 304, 305, 306, 307, 314, 315, 316) with a drive shaft (301) and at least two output shafts (306, 316), the two output shafts (306, 316') being addressable alternately by the drive shaft (301).

5. A device according to claim 4, **characterised in that** the securing device (2, 3, 11) is operatively connected on the one hand to the first output shaft (306) and on the other hand to the two spigots (10, 100, 100'), the securing device (2, 3, 11) preferably comprising a connection element (2) between the first spigot (10) and the second spigot (100, 100'), said connection element being rotatable about a first axis to lock the two spigots (10, 100, 100') relatively to one another or unlock the same, particularly via at least one bayonet fastening (3, 11).

6. A device according to claim 4 or 5, **characterised in that** the pivoting device (26, 126, 126') is operatively connected on the one hand to the second output shaft (316) forming the at least one shaft and on the other hand to at least one of the two closure flaps (21, 121, 121') to rotate the closure flaps (21, 121, 121') about the second axis, the pivoting device preferably comprising the two half shafts (26, 126, 126').

7. A device according to any one of claims 3 to 6, **characterised in that** the cleaning position is approachable both between the closure position and the locking position and also between the open position and the locking position with at least partially rigidly interconnected closure flaps (21, 121, 121') and/or spigots (10, 100, 100').

8. A device according to any one of claims 5 to 7, **characterised in that** the connection element (2) comprises at least one projection or at least one recess (3), and each projection or each recess (3) of the connection element (2) rigidly engages a recess or a projection (11) of the first spigot (10) and/or of the second spigot in the locking position, each projection (11) or each recess of the connection element (2) or of the spigot or spigots (10) preferably including, at least in certain zones, an angle to the first axis in order to move the closure flaps (21, 121, 121') away from one another by rotation of the connection element (2) about the first axis, particularly between the open position and the locking position, or towards one another, particularly between the closure position and the locking position.

9. A device according to any one of the preceding claims, **characterised in that** the first closure flap (21) comprises a first end face (22) with at least one recess (23) and/or elevation, the second closure flap (121) comprises a second end face (122) complementary to the first end face (22), and the two end faces (22, 122) bear sealingly against one another at least in the open position,while in the cleaning position the end faces (22, 122') are preferably sealed off from one another in the region of the at least one recess (23) and/or elevation and the cleaning chamber (400) is substantially annular.

10. A device according to any one of the preceding claims, **characterised in that** the first closure flap (21) comprises at least one first recess (24) on its side remote from the first end face (22) and/or the second closure flap (121, 121') comprises at least one second recess (124, 124') on its side remote from the second end face (122, 122') in order to increase the size of the passage opening or openings (200, 200') in the open position, the first recess (24) and/or the second recess (124, 124') preferably being substantially in the form of a spherical segment.

11. A device according to any one of the preceding claims, **characterised in that** in the open position the first closure flap (21) is at least partially in engagement with the second spigot (100) and/or the second closure flap (121, 121') is at least partially in engagement with the first spigot (10).

12. A device according to claim 11, **characterised in that** the first closure flap (21) and/or the second closure flap (121, 121') comprises/comprise at least one partially annular projection (27, 127, 127'), preferably two opposite partially annular projections, concentrically to the second axis for engagement in at least one partially annular recess (12, 102) in the first spigot (10) and/or in the second spigot (100).

13. A device according to claim 11, **characterised in that** the first closure flap and/or the second closure flap comprises/comprise at least one partially annular groove, preferably two opposite partially annular grooves, concentrically to the second axis for engagement in at least one partially annular recess in the first spigot and/or in the second spigot.

14. A device according to any one of claims 6 to 13, **characterised in that** the second axis is substantially perpendicular to the first axis.

15. A device according to any one of the preceding claims, **characterised in that** the first closure flap (21) is part of a passive valve (20) and the second closure flap (121, 121') is part of an active valve (120), the second half shaft (126) preferably being rigidly connected to the second output shaft (316).

16. A device according to any one of the preceding claims, **characterised in that** the cleaning device comprises a blowing and suction-extraction device for flooding the cleaning chamber (400) with a fluid cleaning agent.

17. A device according to any one of the preceding claims, **characterised in that** the first, second, third and/or fourth seal or seals is/are resistant to acids and/or bases.

18. A device according to any one of the preceding claims, **characterised in that** the cleaning chamber (400) acts as a lock.

19. A device according to any one of the preceding claims, **characterised in that** the cleaning chamber (400) can be brought to a pressure below atmospheric pressure and/or below the pressure in the region of the passage opening (200, 200').

20. A device according to any one of the preceding claims, **characterised by** a sensing unit for determining the product concentration in the cleaning chamber (400), particularly in operative connection with the actuating device (300, 301, 302, 303, 304, 305, 306, 307, 314, 315, 316).

21. A device according to claim 20, **characterised in that** if the specific product concentration falls below a selectable limit, the actuating device (300, 301, 302, 303, 304, 305, 306, 307, 314, 315, 316) is releasable to drive the closure flap (21, 121, 121') into the closure position.

## Revendications

1. Dispositif pour connecter deux moyens de stockage et / ou de transport, se présentant par exemple sous la forme de réservoirs, de conteneurs, de tubes et / ou similaire et utilisé pour transférer un produit d'un premier moyen de stockage et / ou de transport avec un premier clapet de fermeture, disposé dans un premier segment de tube (10), à une première extrémité et coopérant avec au moins un arbre, vers un second moyen de stockage et / ou de transport avec un second clapet de fermeture disposé dans un second segment de tube (100, 100') à une seconde extrémité et coopérant avec au moins un arbre, où les clapets de fermeture peuvent être déplacés d'une position de fermeture (dans laquelle le premier clapet de fermeture (21) isole, de manière étanche, contre l'atmosphère, le premier moyen de stockage et / ou de transport à la première extrémité, le second clapet de fermeture (121) isole, de manière étanche contre l'atmosphère, le second moyen de stockage et / ou de transport à la seconde extrémité et les deux clapets de fermeture et / ou les deux segments de tubes sont mobiles l'un par rapport à l'autre) vers une position de nettoyage (dans laquelle les deux clapets de fermeture et / ou les deux segments de tubes sont espacés d'une manière limitée l'un de l'autre par un espace de nettoyage (400) susceptible d'être connecté avec une installation de nettoyage) et ensuite, par l'actionnement d'au moins un arbre, vers une position d'ouverture, dans laquelle les clapets de fermeture reposent l'un sur l'autre et dans laquelle au moins une ouverture d'écoulement est ouverte pour le produit entre le premier moyen de stockage et / ou de transport et le second moyen de stockage et / ou de transport ; et également, les clapets de fermeture peuvent être déplacés par l'actionnement d'au moins un arbre, de la position d'ouverture vers la position de nettoyage et ensuite vers la position de fermeture, **caractérisé par**
une première garniture d'étanchéité (25) de forme sensiblement annulaire, disposée entre le premier clapet de fermeture (21) et le premier segment de tube (10),
une seconde garniture d'étanchéité (125) de forme sensiblement annulaire entre le second clapet de fermeture (121) et le second segment de tube (100),
une troisième garniture d'étanchéité (401) de forme sensiblement annulaire (10) entre le premier segment de tube (10) et le second segment de tube (100) et
une quatrième garniture d'étanchéité (402) de forme sensiblement annulaire entre le second segment de tube (100) et une seconde section d'arbre coopérant avec au moins un arbre (316) et connectée solidement avec le second clapet de fermeture (121), où les première, seconde, troisième et quatrième garnitures d'étanchéité (25, 125, 401, 402) isolent l'espace de nettoyage (400) aussi bien de l'atmosphère que du produit.

2. Dispositif selon la revendication 1, **caractérisé en ce que**
la première section d'arbre est un premier demi-axe (26), que la seconde section d'arbre est un axe complet (316) qui est solidaire du second clapet de fermeture (121) par l'intermédiaire d'un second demi-axe (126) et que le premier demi-axe (26) et le second demi-axe (126) forment un arbre complet.

3. Dispositif selon la revendication 1 ou la revendication 2, **caractérisé par**
une installation de commande (300, 301, 302, 303, 304, 305, 306, 307, 314, 315, 316) pour actionner une installation de verrouillage (2, 3,11) pour passer d'une position de fermeture à une position de verrouillage dans laquelle les deux moyens de stockage et / ou de transport sont mutuellement isolés de manière étanche et les deux clapets de fermeture (21, 121, 121') et / ou les deux segments de tubes (10, 100, 100') sont tenus solidement ensemble, ensuite une installation de pivotement (26, 126, 126') pour passer de la position de verrouillage vers la position d'ouverture, ainsi que de la position d'ouverture vers la position de verrouillage et enfin l'installation de verrouillage pour passer de la position de verrouillage vers la position de fermeture.

4. Dispositif selon la revendication 3, **caractérisé en ce que**
l'installation de commande comporte une installation d'actionnement (300, 301, 302, 303, 304, 305, 306, 307, 314, 315, 316) avec un arbre d'actionnement (301) et au moins deux arbres de sortie (306, 316) , où les deux arbres de sortie (306, 316') peuvent être actionnés à tour de rôle par l'arbre d'actionnement (301).

5. Dispositif selon la revendication 4, **caractérisé en ce que**
l'installation de verrouillage (2, 3, 11) coopère, d'une part, avec le premier arbre de sortie (306) et, d'autre part, avec les deux segments de tubes (10, 100, 100'), et **en ce que** l'installation de verrouillage (2, 3, 11) comporte, de préférence, un élément de liaison (2) entre le premier segment de tube (10) et le second segment de tube (100, 100'), qui peut être tourné autour d'un premier axe pour verrouiller les deux segments de tubes (10, 100, 100') l'un avec l'autre ou les déverrouiller, en particulier au moyen d'au moins un emboîtement à baïonnette (3, 11).

6. Dispositif selon la revendication 4 ou la revendication 5, **caractérisé en ce que**
l'installation de pivotement (26, 126, 126') coopère, d'une part, avec un second arbre de sortie (316) formant au moins un arbre et, d'autre part, avec un des deux clapets de fermeture (21, 121, 121') pour faire pivoter les clapets de fermeture (21, 121, 121') autour d'un second axe, l'installation de pivotement comprenant, de préférence, les deux demi-axes (26, 126, 126').

7. Dispositif selon l'une des revendications 3 à 6, **caractérisé en ce que**
la position de nettoyage, aussi bien entre la position de fermeture et la position de verrouillage qu'entre la position d'ouverture et la position de verrouillage peut être atteinte avec les clapets de fermeture (21, 121, 121') et / ou les segments de tubes (10, 100, 100') tenus fermement ensemble, au moins partiellement.

8. Dispositif selon l'une des revendications 5 à 7, **caractérisé en ce que**
l'élément de liaison (2) comporte au moins une saillie ou au moins un évidement (3), que chaque saillie ou chaque évidement (3) de l'élément de liaison (2) est fermement engagé avec un évidement ou une saillie (11) du premier segment de tube (10) et / ou du second segment de tube dans la position de verrouillage et que, de préférence, chaque saillie (11) ou chaque évidement de l'élément de liaison (2) du segment de tube ou des segments de tubes (10) forme un angle avec le premier axe, ce qui permet d'éloigner les clapets de fermeture (21, 121, 121') l'un de l'autre par la rotation de l'élément de liaison (2) autour du premier axe, en particulier entre la position d'ouverture et la position de verrouillage ou de les rapprocher mutuellement, en particulier, entre la position de fermeture et la position de verrouillage.

9. Dispositif selon l'une des revendications précédentes, **caractérisé en ce que**
le premier clapet de fermeture (21) présente une première surface frontale (22) avec au moins une creusure (23) et / ou avec au moins une élévation, que le second clapet de fermeture (121) présente une seconde surface frontale (22) complémentaire de la première surface frontale (122), que les deux surfaces frontales (22, 122) se placent l'une au-dessus de l'autre et de manière étanche au moins dans la position d'ouverture, que, de préférence, dans la position de nettoyage, les surfaces frontales (22, 122') dans la région de la creusure ou des creusures (23) et / ou de l'élévation ou des élévations soient mutuellement étanches et que l'espace de nettoyage (400) soit sensiblement annulaire.

10. Dispositif selon l'une des revendications précédentes, **caractérisé en ce que**
le premier clapet de fermeture (21) comporte au moins un évidement (24) sur son côté opposé à la première surface frontale (22) et / ou le second clapet de fermeture (121, 121') comporte au moins un second évidement (124, 124') sur son côté opposé à la seconde surface frontale (122, 122'), pour augmenter l'ouverture d'écoulement ou les ouvertures d'écoulement (200, 200') dans la position d'ouverture et **en ce que**, de préférence, le premier évidement (24) ou / et le second évidement (124, 124') a / ont sensiblement la forme d'une portion de sphère.

11. Dispositif selon l'une des revendications précédentes, **caractérisé en ce que**
dans la position d'ouverture, le premier clapet de fermeture (21) vient s'engager, au moins partiellement, avec le second segment de tube (100) et / ou que le second clapet de fermeture (121,121') vient s'engager, au moins partiellement, avec le premier segment de tube (10).

12. Dispositif selon la revendication 11, **caractérisé en ce que**
le premier clapet de fermeture (21) ou / et le second clapet de fermeture (121,121') comprend ou comprennent au moins une saillie (27, 127, 127') ayant la forme d'un anneau partiel et, de préférence deux saillies opposées ayant chacune la forme d'un anneau partiel, concentrique ou concentriques avec le second axe pour venir s'engager avec au moins un évidement (12, 102) ayant la forme d'un anneau partiel dans le premier segment de tube (10) et / ou le second segment de tube (100).

13. Dispositif selon la revendication 11, **caractérisé en ce que**
le premier clapet de fermeture ou / et le second clapet de fermeture comprend ou comprennent au moins une rainure de forme partiellement annulaire et, de préférence, deux rainures de forme partiellement annulaire opposées et concentriques, par rapport au second axe, pour venir s'engager dans au moins un évidement de forme partiellement annulaire dans le premier segment de tube et / ou dans le second segment de tube.

14. Dispositif selon l'une des revendications 6 à 13, **caractérisé en ce que**
le second axe est sensiblement perpendiculaire au premier axe.

15. Dispositif selon l'une des revendications précédentes, **caractérisé en ce que**
le premier clapet de fermeture (21) fait partie d'une soupape passive (20), que le second clapet de fermeture (121, 121') fait partie d'une soupape active (120) et que, à ce moment et de préférence, le second demi-axe (126) est solidaire du second arbre de sortie (316).

16. Dispositif selon l'une des revendications précédentes, **caractérisé en ce que**
l'installation de nettoyage comporte une installation de soufflage et d'aspiration, pour purger l'espace de nettoyage (400) avec un milieu de nettoyage fluide.

17. Dispositif selon l'une des revendications précédentes, **caractérisé en ce que**
la première, la seconde, la troisième ou *l* et la quatrième garniture / garnitures d'étanchéité est / sont résistantes contre les acides et / ou les bases.

18. Dispositif selon l'une des revendications précédentes, **caractérisé en ce que**
l'espace de nettoyage (400) fonctionne comme écluse.

19. Dispositif selon l'une des revendications précédentes, **caractérisé en ce que**
l'espace de nettoyage (400) peut être amené à une pression inférieure à la pression atmosphérique et / ou inférieure à la pression dans la région de l'ouverture d'écoulement (200, 200').

20. Dispositif selon l'une des revendications précédentes, **caractérisé par**
l'utilisation d'un capteur pour déterminer la concentration en produit dans l'espace de nettoyage (400), en particulier un capteur coopérant avec l'installation de commande (300, 301, 302, 303, 304, 305, 306, 307, 314, 315, 316).

21. Dispositif selon la revendication 20, **caractérisé en ce que**
lorsqu'une valeur limite choisie de la concentration du produit n'est plus atteinte, l'installation de commande (300, 301, 302, 303, 304, 305, 306, 307, 314, 315, 316) peut agir sur le clapet de fermeture (21, 121, 121') pour le mettre en position de fermeture.
